(19) **Europäisches Patentamt European Patent Office Office européen des brevets**

(11) **EP 4 615 062 A1**

(12) **EUROPEAN PATENT APPLICATION**
published in accordance with Art. 153(4) EPC

(43) Date of publication:
**10.09.2025  Bulletin 2025/37**

(21) Application number: **23884310.6**

(22) Date of filing: **20.07.2023**

(51) International Patent Classification (IPC):
**H04W 52/02** (2009.01)

(52) Cooperative Patent Classification (CPC):
**H04W 52/02; H04W 72/12; H04W 72/1268;**
**Y02D 30/70**

(86) International application number:
**PCT/CN2023/108393**

(87) International publication number:
**WO 2024/093371 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **03.11.2022  CN 202211372713**

(71) Applicant: **ZTE Corporation**
**Shenzhen, Guangdong  518057 (CN)**

(72) Inventors:
• **NIU, Li**
 **Shenzhen, Guangdong 518057 (CN)**
• **GAO, Yuan**
 **Shenzhen, Guangdong 518057 (CN)**
• **SHA, Xiubin**
 **Shenzhen, Guangdong 518057 (CN)**

(74) Representative: **Vossius & Partner**
**Patentanwälte Rechtsanwälte mbB**
**Siebertstraße 3**
**81675 München (DE)**

(54) **INFORMATION TRANSMISSION METHOD, BASE STATION, TERMINAL, AND STORAGE MEDIUM**

(57)    Provided are a method of information transmission, a base station, a terminal and a storage medium. The method of information transmission comprises: a base station transmitting configuration information of mute time to a terminal, wherein the mute time is time when the base station is in a mute state.

```
┌──────────────┐                          ┌──────────────┐
│ Base station │                          │   Terminal   │
└──────────────┘                          └──────────────┘
        │                                         │
        │ S101: Transmit, to the terminal,        │
        │       configuration                     │
        │       information of mute time          │
        │ ───────────────────────────────────────▶│
        │                                         │
        │              ┌──────────────────────────────────────────┐
        │              │ S102: Receive the configuration           │
        │              │ information of the mute                   │
        │              │ time from the base station                │
        │              └──────────────────────────────────────────┘
        │                                         │
```

**FIG. 2**

**Description**

**CROSS-REFERENCE TO RELATED APPLICATION(S)**

The present disclosure claims priority to Chinese Application No. 202211372713.1, filed on November 03, 2022, and the disclosures of which are incorporated herein by reference in their entities.

**FIELD**

The present disclosure relates to the technical field of communication, and in particular to a method of information transmission, a base station, a terminal and a storage medium.

**BACKGROUND**

With the development of 5th generation mobile networks (5G), the requirements for 5G network construction are also higher and higher, therefore 5G base stations are also deployed in large numbers.

**SUMMARY**

In one aspect, some embodiments of the present disclosure provide a method of information transmission, including:
transmitting, by a base station to a terminal, configuration information of mute time, the mute time being time when the base station is in a mute state.

In another aspect, some embodiments of the present disclosure provide a method of information transmission, including:
receiving, by a terminal from a base station, configuration information of mute time, the mute time being time when the base station is in a mute state.

In yet another aspect, some embodiments of the present disclosure provide an apparatus of information transmission, including:
a transmitting unit, configured to transmit, to a terminal, configuration information of mute time, the mute time being time when a base station is in a mute state.

In yet another aspect, some embodiments of the present disclosure provide an apparatus of information transmission, including:
a receiving unit, configured to receive, from a base station, configuration information of mute time, the mute time being time when the base station is in a mute state.

In yet another aspect, some embodiments of the present disclosure provide a base station, including a processor and a memory; the memory stores instructions executable by the processor; and the processor is configured to, when executing the instructions, cause the base station to implement the methods provided above.

In yet another aspect, some embodiments of the present disclosure provide a terminal, including a processor and a memory; the memory stores instructions executable by the processor; and the processor is configured to, when executing the instructions, cause the terminal to implement the methods provided above.

In yet another aspect, some embodiments of the present disclosure provide a computer-readable storage medium, the computer-readable storage medium storing computer instructions, when **runs** on a computer, causing the computer to execute the methods provided above.

In yet another aspect, some embodiments of the present disclosure provide a computer program product including computer instructions, when runs a computer, causing the computer to execute the methods provided above.

**BRIEF DESCRIPTION OF THE DRAWINGS**

The drawings are used to provide a further understanding of the technical solutions in the present disclosure, constitute a part of the specification, are used to explain the technical solutions of the present disclosure together with the embodiments of the present disclosure, and do not constitute a limitation on the technical solutions of the present disclosure.

FIG. 1 is a schematic structural diagram of a communication system according to some embodiments;

FIG. 2 is a schematic flowchart of a method of information transmission according to some embodiments;

FIG. 3 is a schematic diagram of a configuration of mute time of a base station according to some embodiments;

FIG. 4 is a schematic diagram of configuration information of mute time of another base station according to some embodiments;

FIG. 5 is a schematic diagram of configuration information of mute time of yet another base station according to some embodiments;

FIG. 6 is a schematic diagram of configuration information of mute time of yet another base station according to some embodiments;

FIG. 7 is a schematic diagram of configuration information of mute time of yet another base station according to some embodiments;

FIG. 8 is a schematic diagram of configuration information of mute time of yet another base station according to some embodiments;

FIG. 9 is a schematic diagram of composition of an apparatus of information transmission according to some embodiments;

FIG. 10 is a schematic diagram of composition of another apparatus of information transmission according to some embodiments;

FIG. 11 is a schematic structural diagram of a base station according to some embodiments; and

FIG. 12 is a schematic structural diagram of a terminal according to some embodiments.

## DETAILED DESCRIPTION OF EMBODIMENTS

In order to enable those skilled in the art to better understand the technical solutions of the embodiments of the present disclosure, a clear and complete description of the technical solutions in the embodiments of the present disclosure will be given below, in combination with the drawings in the embodiments of the present disclosure. Apparently, the embodiments described below are merely a part, but not all, of the embodiments of the present disclosure. All of other embodiments, obtained by those ordinary skilled in the art based on the embodiments in the present disclosure without any creative effort, fall into the protection scope of the present disclosure.

It should be noted that all directional indications (e.g., upper, lower, left, right, front, rear ......) in the embodiments of the present invention are merely used to explain relative position relationships, motion conditions and the like between components under a certain specific posture (as shown in the drawings), and if the specific posture changes, the directional indications also correspondingly change accordingly.

The terms "first" and "second" are used for descriptive purposes only and cannot be construed as indicating or implying relative importance or implicitly indicating the number of indicated technical features. Thus, features defined with "first" and "second" may explicitly or implicitly include one or more features. In the description of the present disclosure, unless otherwise specified, "a plurality of" means two or more.

In the description of the present disclosure, unless otherwise stated, "/" means "or", for example, A/B may represent A or B. The term "and/or" comprises any and all combinations of one or more related listed entries. For example, A and/or B comprises only A, only B, and A and B.

In the description of the present disclosure, it should be noted that unless expressly specified and limited otherwise, the terms "connected" and "connection" should be understood in a broad sense, for example, the connection may be a fixed connection, and may also be a detachable connection, or an integral connection. For those ordinary skilled in the art, the specific meanings of the above terms in the present disclosure may be understood according to specific situations. In addition, when a pipeline is described, the "connected" and "connection" used in the present disclosure have the meaning of conducting, and the specific meaning needs to be understood in combination with the context.

In the embodiments of the present disclosure, words such as "exemplary" or "for example" are used to represent giving an example, an illustration or a description. Any embodiment or design scheme described as "exemplary" or "for example" in the embodiments of the present disclosure should not be explained as being more preferred or more advantageous than other embodiments or design schemes. Exactly, the usage of the words such as "exemplary" or "for example" is intended to present related concepts in a specific manner.

In 5G communication, beam forming has been widely used. A 5G network has the advantages of a high network speed, a low network delay, and the like. Due to the limitation of frequency bands and systems, which are used by the 5G network, compared with the 4th generation mobile networks (4G), and the 5G network has the characteristic of a small coverage radius, such that the number of 5G base stations is greater than the number of 4G base stations. In addition, compared with the 4G base stations, more antennas are deployed in the 5G base stations, so that the 5G base stations require more power consumption. For a mobile communication network, not communication traffic volumes in all time period are the same, and the 5G base stations remain turned on under different communication traffic volumes, resulting in unnecessary power consumption. Therefore, reducing the power consumption of the 5G base stations to achieve energy saving of the 5G base stations is a problem to be solved urgently.

At present, an energy-saving method for a 5G base station is to determine, according to the current communication traffic volume, whether to turn on the 5G base station. For example, when it is detected that the current communication traffic volume is lower than a traffic volume threshold value, the 5G base station is turned off, and when it is detected that the current communication traffic volume is higher than the traffic volume threshold value, the 5G base station is turned on. Although the energy-saving method may reduce the power consumption of the 5G base station, due to the means of turning off the 5G base station when the current communication traffic volume is lower than the traffic volume threshold value, a terminal within the network range of the 5G base station cannot obtain the response of the 5G base station during a turn-off period of the 5G base station, such that a user cannot enjoy 5G network services in time, thereby reducing the usage perception of the terminal. Therefore, how to ensure the communication between the terminal and the 5G base station while reducing the power consumption of the base station so as to ensure the usage perception of the terminal is a problem to be solved urgently.

In order to solve the above problems, embodiments of the present disclosure provide a method of information transmission. In the method of information transmission, a base station transmits configuration information of mute time to a terminal device, in which the mute time is time when the base station is in a mute state, that is, time when the terminal learns that the base station is in the mute state, so that the terminal stops transmitting network data to the base station within the time when the base station is in the mute state. In this way, the situation is avoided that the usage perception of the terminal is reduced due to the fact that the terminal transmits the network data to the base station within the time when the base station is in the mute state, but cannot obtain the response of the base station, and therefore the communication between the terminal and the 5G base station is ensured. In addition, since the base station is in the mute state within the mute time, the power consumption of the base station may be reduced, while the power consumption of the base station is reduced, the communication between the terminal and the 5G base station is ensured, thereby ensuring the usage perception of the terminal.

The technical solutions provided in the embodiments of the present disclosure may be applied to various communication systems, for example, a new radio (NR) communication system using the 5G communication technology, a future evolution system, or a plurality of communication fusion systems, which is not limited in the present disclosure.

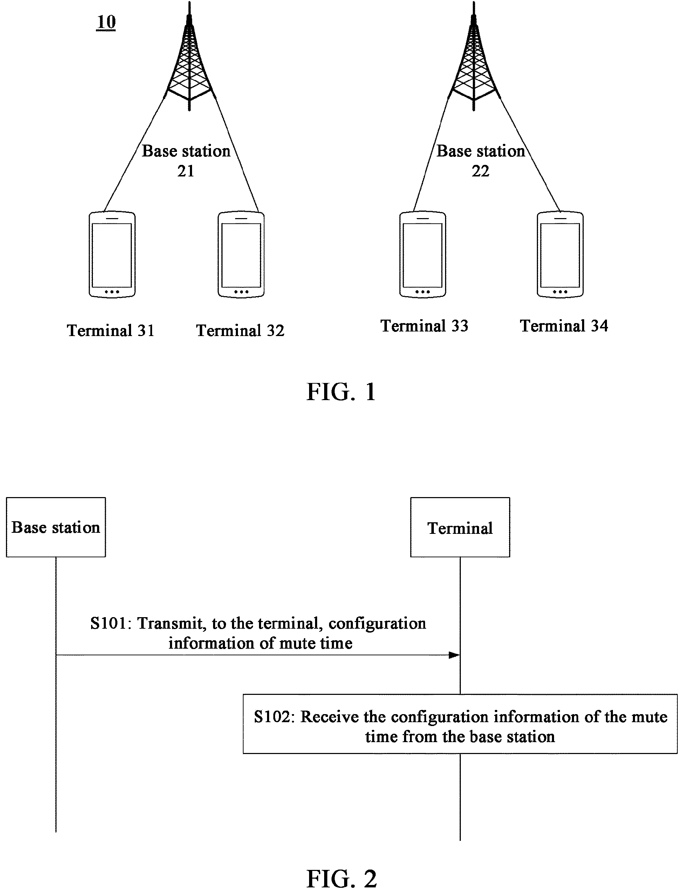

FIG. 1 is a schematic structural diagram of a communication system according to some embodiments. As shown in FIG. 1, a communication system 10 comprises a plurality of base stations (e.g., a base station 21 and a base station 22) and a plurality of terminals (e.g., a terminal 31, a terminal 32, a terminal 33, and a terminal 34). The plurality of base stations and the plurality of terminals may be connected by a wired network or a wireless network. The wired network or the wireless network may include a router, a switch, or other devices for promoting the communication between the plurality of base stations and the plurality of terminals, which is not limited in the embodiments of the present disclosure.

In some embodiments, the base stations are used for providing a wireless access service for the plurality of terminals. In some embodiments of the present disclosure, one base station provides one service coverage area (which may be referred to as a cell). The terminal entering the area may communicate with the base station via a wireless signal, so as to accept the wireless access service provided by the base station. There may be an overlapping area between the service coverage area of the base station 21 and the service coverage area of the base station 22, and the terminal in the overlapping area may receive the wireless signals from the plurality of base stations.

In some embodiments, each of the plurality of base stations may be connected with a plurality of terminal devices, for example, the base station 21 is connected with the terminal 31 and the terminal 32. The terminal 31 and the terminal 32 may be located in the same cell, and the terminal 31 and the terminal 32 may also be located in different cells. That is, one base station may provide a network service for the terminal in one cell, and may also provide the network service for the terminals in a plurality of cells at the same time.

In some embodiments, each base station (e.g., the base station 21) among the plurality of base stations may be an evolution base station (evolution nodeB, eNB), a next-generation base station (generation nodeB, gNB), and a transmission and reception point (transmission receive point, TRP), a transmission point (TP), and any node in some other access nodes. Depending on the size of the provided service coverage area, the base stations may, in turn, be divided into a macro base station for providing a Macro cell, a pico base station for providing a Pico cell, and a femto base station for providing a Femto cell. With the continuous evolution of the wireless communication technology, future base stations may also use other names.

In some embodiments, each terminal device (e.g., the terminal device 31) among the plurality of terminal devices may be a device having a wireless transmission and reception function, for example, a mobile phone, a tablet computer, a wearable device, a vehicle-mounted device, an augmented reality (AR)/virtual reality (VR) device, a notebook computer, an ultra-mobile personal computer (UMPC), a netbook, a personal digital assistant (PDA), or the like. The type of the terminal device is not limited in the embodiments of the present disclosure.

It can be understood that FIG. 1 is an exemplary structural diagram, and the number of devices included in the communication system shown in FIG. 1 is not limited, for example, the number of base stations is not limited and the number of terminal devices is not limited. Moreover, in addition to the devices shown in FIG. 1, the communication system shown in FIG. 1 may further include other devices, which is not limited herein.

FIG. 2 is a schematic flowchart of a method of information transmission according to some embodiments. The method of information transmission shown in FIG. 2 comprises S101 and S102.

S101: a base station transmits, to a terminal, configuration information of mute time.

S102: the terminal receives, from the base station, the configuration information of the mute time.

The mute time is time when the base station is in a mute state. It can be understood that the power consumption of the base station in the mute state is less than the power consumption of the base station in a non-mute state.

In some embodiments, the mute state may be replaced with other names, for example, a dormant state, a sleep state, an energy-saving state, and the like, which is not limited herein.

In some embodiments, the base station in the mute state performs one or more of the following operations.

Operation 1: turning off a dynamic scheduling function.

In some embodiments, the base station turning off the dynamic scheduling function comprises stopping transmitting a physical downlink control channel (PDCCH) and stopping transmitting a physical downlink shared channel (PDSCH), and the like. The PDCCH is used for carrying scheduling and other control information, and the scheduling and the other control information include, for example, a transmission format, resource allocation, an uplink scheduling grant, power control, uplink re-transmission information, and the like, and the PDSCH is used for carrying data from a transmission channel DSCH.

Operation 2: stopping transmitting a downlink signal.

In some embodiments, the downlink signal comprises a PDCCH signal, a PDSCH signal, a synchronization signal/physical broadcast channel block (SS/PBCH, SSB) signal, and the like, that is, stopping transmitting the PDCCH signal, the PDSCH signal, the SSB signal, and the like.

Operation 3: stopping receiving an uplink signal.

In some embodiments, the uplink signal comprises a physical uplink control channel (PUCCH) signal and a physical uplink shared channel (PUSCH) signal, and the like, that is, stopping receiving the PUCCH signal and the PUSCH signal.

The PUCCH is used for carrying information such as an acknowledgement (ACK) or a negative acknowledgement (NACK) of a hybrid automatic repeat request (HARQ), a scheduling request (SR), and a channel quality indicator (CQI). The PUSCH is used for carrying user data and control information.

Operation 4: turning on an energy-saving function.

In some embodiments, the energy-saving function may have a plurality of states, for example, a light state, a micro state and a deep state. Different states correspond to different mute durations (i.e., the duration of the mute state), for example, a mute duration of the base station in the light state is less than a mute duration of the base station in the micro state, and the mute duration of the base station in the micro state is less than a mute duration of the base station in the deep state. The mute duration is a duration in which the base station is in the mute state.

It can be understood that, the above operations 1 to 4 are merely examples, and the base station in the mute state may further execute other operations beneficial for energy saving.

It can be understood that, when the base station performs the above operations related to the mute state, the base station may achieve the purpose of energy saving by turning off some components and parts of the base station itself. For example, during the process when the base station stops transmitting the downlink signal, the base station may turn off a transmitter. As another example, during the process when the base station stops receiving the uplink signal, the base station may turn off a receiver.

In some embodiments, the mute state may have a plurality of types, and mute states of different types may achieve different energy-saving effects. For example, the types of mute state may comprise a first type, a second type and

EP 4 615 062 A1

a third type. As one example, the mute states of different types may correspond to different operations, for example, the base station in the mute state of the first type performs the above operations 1 to 4, the base station in the mute state of the second type performs the above operations 1 to 3, the base station in the mute state of the third type performs the above operation 4. As another example, the mute states of different types may correspond to different mute durations.

In some embodiments, the configuration information of the mute time is used for determining the position of the mute time in a time domain. Therefore, the configuration information of the mute time may comprise related parameters for determining the position of the mute time in the time domain. As one example, the terminal may determine the position of the mute time in the time domain only according to the configuration information of the mute time. As another example, the terminal may determine the position of the mute time in the time domain according to the configuration information of the mute time and other information (e.g., other information issued by the base station, information pre-specified by a communication standard, and so on).

Optional implementations of the configuration information of the mute time are described below.

Manner 1: the configuration information of the mute time comprises one or more of the following parameters: a start occasion of the mute time, a duration of the mute time, or an end occasion of the mute time.

In some embodiments, the end occasion of the mute time may be obtained by the start occasion of the mute time and the duration of the mute time. Or, the duration of the mute time may be obtained by the start occasion of the mute time and the end occasion of the mute time.

In some embodiments, the end occasion of the mute time may be replaced with other names, for example, the end occasion of the mute time may also be referred to as a termination occasion of the mute time.

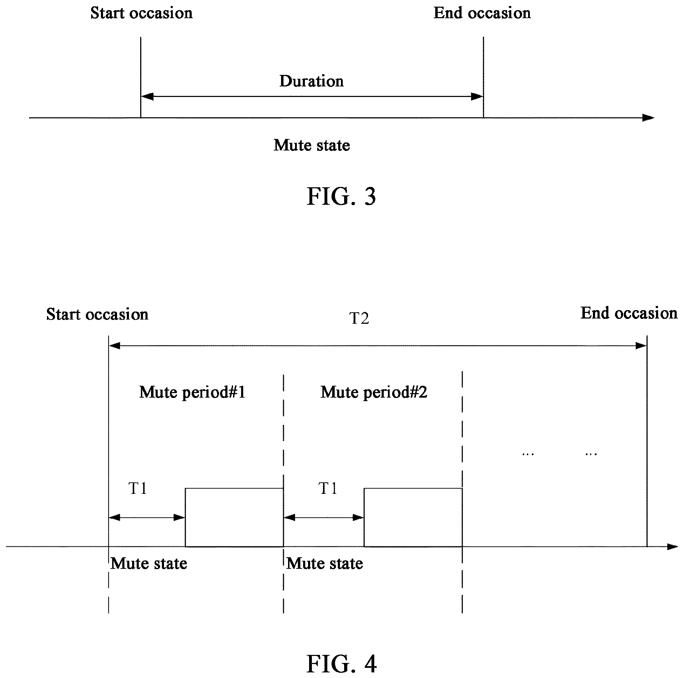

FIG. 3 is a schematic diagram of configuration of mute time of a base station according to some embodiments. It can be seen from FIG. 3 that, the base station enters the mute state at the start occasion of the mute time, maintains the mute state during the duration of the mute time, and exits the mute state at the end occasion of the mute time. The configuration information of the mute time may use the above manner 1, so that the terminal can determine one position of mute time in the time domain.

Manner 2: the configuration information of the mute time may comprise one or more of the following parameters: the length of a first time-domain resource including one or more mute periods, a start occasion of the first time-domain resource, an end occasion of the first time-domain resource, the length of a repetition period of the first time-domain resource, a duration of the mute time, or the length of the mute period. There is one mute time in each mute period.

The first time-domain resource may be any time-domain resource in the time domain, which is not limited herein.

As one example, the configuration information of the mute time may further comprise a start occasion and/or an end occasion of the mute time in the mute period. As another example, the start occasion and/or the end occasion of the mute time in the mute period may also be appointed in advance, for example, it is appointed in advance that the start occasion of the mute time is the same as the start occasion of the mute period.

FIG. 4 is a schematic diagram of configuration of mute time of another base station according to some embodiments. As shown in FIG. 4, a first time-domain resource with a length of T2 may comprise a plurality of mute periods, for example, a mute period #1 and a mute period #2. There is mute time with a duration of T1 in each mute period. The configuration information of the mute time needs to use the above manner 2, so that the terminal can determine the position of the first time-domain resource in the time domain, and determine a plurality of positions of periodically repeated mute time on the first time-domain resource.

Manner 3: the configuration information of the mute time may comprise one or more of the following parameters: the length of a first time-domain resource including one or more mute periods, a start occasion of the first time-domain resource, an end occasion of the first time-domain resource, the length of a repetition period of the first time-domain resource, a duration of the mute time, or the length of the mute period. There is one mute time in each mute period.

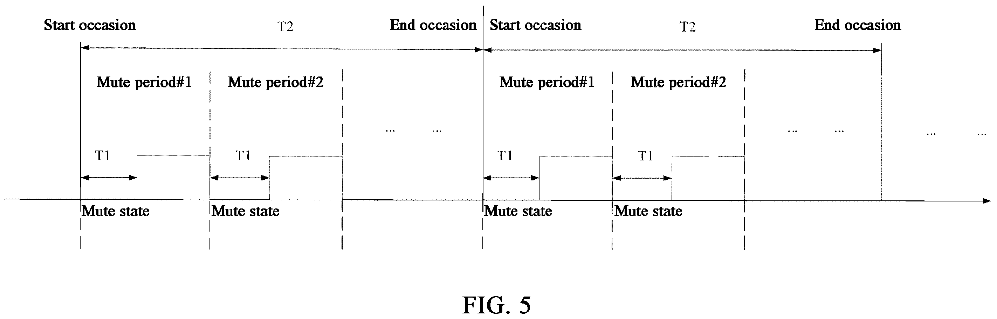

FIG. 5 is a schematic diagram of configuration of mute time of yet another base station according to some embodiments. As shown in FIG. 5, there are a plurality of periodically repeated first time-domain resources in the time domain, there are a plurality of periodically repeated mute periods in each first time-domain resource, and there is one mute time in each mute period. The configuration information of the mute time may use the above manner 3, so that the terminal can determine each position of mute time in the time domain.

Manner 4: the configuration information of the mute time comprises first configuration information and second configuration information. The first configuration information is used for configuring one or more first mute periods on a first time-domain resource, and there is mute time with a first duration in the first mute period. The second configuration information is used for configuring one or more second mute periods within a non-mute time in the first mute period, and there is mute time with a second duration in the second mute period.

In some embodiments, the first configuration information comprises one or more of the following parameters: the length of a first time-domain resource, a start occasion of the first time-domain resource, an end occasion of the first time-domain resource, the first duration, or the length of the first mute period.

In some embodiments, the second configuration information comprises one or more of the following parameters: the second duration, the length of the second mute period, or the length of a second time-domain resource, in which the second time-domain resource is a time-domain resource used for configuring the second mute period within the non-mute time of the first mute period.

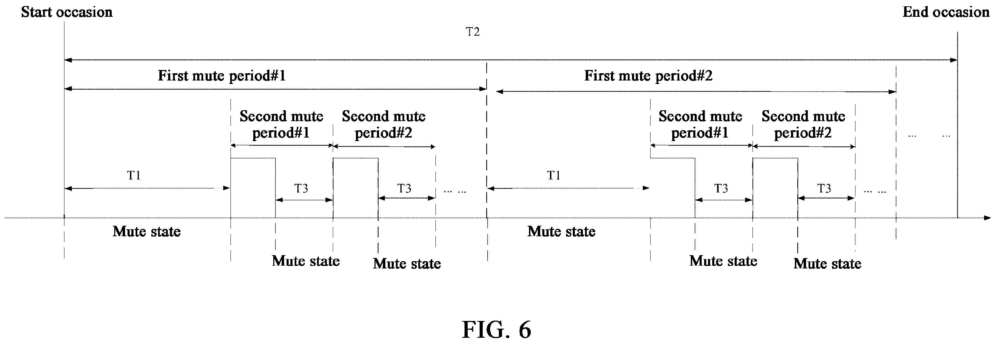

FIG. 6 is a schematic diagram of configuration of mute time of yet another base station according to some embodiments. As shown in FIG. 6, a first time-domain resource with a length of T2 may comprise a plurality of first mute periods, for example, a first mute period #1 and a first mute period #2. There is mute time with a duration of T1 in each first mute period, there are a plurality of second mute periods in each first mute period, for example, a second mute period #1 and a second mute period #2, and there is mute time with a duration of T3 in each second mute period. The configuration information of the mute time may use the above manner 4, so that the terminal can determine each configuration of mute time in the time domain.

Manner 5: the configuration information of the mute time is discontinuous reception (DRX) configuration information, and the DRX configuration information comprises one or more of the following parameters: the length of a DRX period, an on duration, the length of a first time-domain resource including one or more DRX periods, a start occasion of the first time-domain resource, or an end occasion of the first time-domain resource.

An inactive time or an off period in the DRX period is mute time.

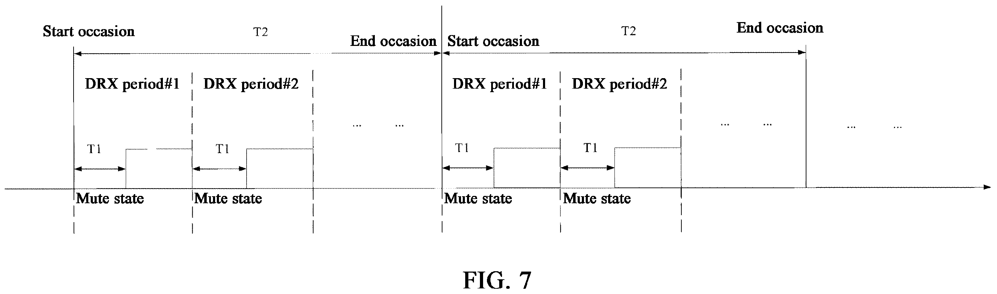

FIG. 7 is a schematic diagram of configuration of mute time of yet another base station according to some embodiments. As shown in FIG. 7, there are a plurality of periodically repeated first time-domain resources in the time domain, there are a plurality of periodically repeated DRX periods in each first time-domain resource, for example, a DRX period #1 and a DRX period #2, and there is one mute time in each DRX period. The configuration information of the mute time may use the above manner 5, so that the terminal can determine the position of each mute time in the time domain.

Manner 6: the configuration information of the mute time comprises one or more of the following parameters: a bitmap sequence, a start occasion of a first time-domain resource, or the length of a repetition period of the first time-domain resource. The bitmap sequence comprises one or more indication bits, each indication bit corresponds to one time-domain unit in the first time-domain resource, and the indication bit is used for indicating whether the corresponding time-domain unit belongs to the mute time.

For example, it is taken as an example that each indication bit is implemented by one bit, if the value of the indication bit is 0, it indicates that the corresponding time-domain unit does not belong to the mute time, and if the value of the indication bit is 1, it indicates that the corresponding time-domain unit belongs to the mute time.

In some embodiments, the time-domain unit may be a symbol, a time slot, or a subframe, which is not limited herein.

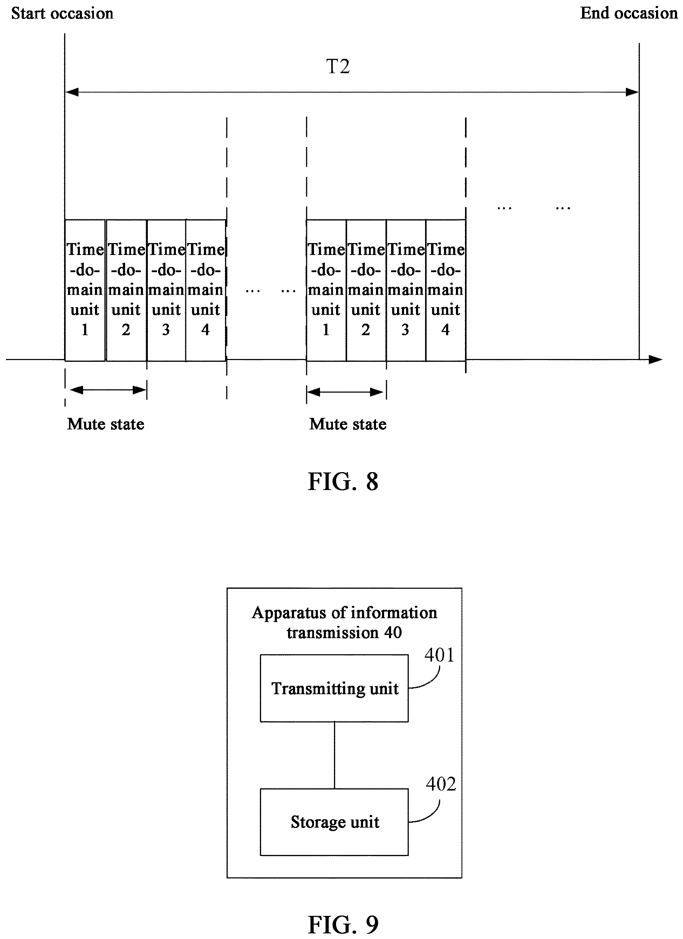

FIG. 8 is a schematic diagram of configuration of mute time of yet another base station according to some embodiments. As shown in FIG. 8, a first time-domain resource with a length of T2 may comprise a plurality of time-domain units, for example, a time-domain unit 1, a time-domain unit 2, a time-domain unit 3 and a time-domain unit 4. In some embodiments, it is assumed that the value of the indication bit corresponding to the time-domain unit 1 is 1, the value of the indication bit corresponding to the time-domain unit 2 is 1, the value of the indication bit corresponding to the time-domain unit 3 is 0, and the value of the indication bit corresponding to the time-domain unit 4 is 0, then it indicates that the base station is in the mute state in the time-domain unit 1 and the time-domain unit 2, and is in a non-mute state in the time-domain unit 3 and the time-domain unit 4. The configuration information of the mute time may use the above manner 6, so that the terminal can determine each position of mute time in the time domain.

The above description is an exemplary description of the implementations of the configuration information of the mute time, which is not limited in the present disclosure.

In some embodiments, the configuration information of the mute time is carried in a high-layer signaling or a physical-layer signaling. The high-layer signaling may comprise radio resource control (RRC) signaling, a medium access control control element (MAC CE), or a system message. The physical-layer signaling may include control information, for example, downlink control information (DCI).

In some embodiments, the high-layer signaling comprises one or more configuration information of mute time, and an index value and/or a mute state type corresponding to each configuration information of mute time. The terminal may find the configuration information of the corresponding mute time based on the index value or the mute state type.

In some embodiments, the configuration information of the mute time, which is issued by the base station, is about to take effect (or immediately takes effect). For example, the base station transmits, to the terminal, an MAC CE or DCI carrying the configuration information of one mute time, so that the terminal can consider that the configuration information of the mute time, which is carried in the MAC CE or the DCI, is about to take effect. The base station enters the mute state at the corresponding mute time according to the configuration information of the mute time. The terminal may also determine the position of the mute time in the time domain based on the configuration information of the mute time.

In some embodiments, the configuration information of the mute time, which is issued by the base station, does not take effect temporarily. The base station may transmit first indication information to the terminal, wherein the first indication information may be for indicating that the base station enters the mute state, or the first indication information is used for enabling the configuration information of the mute time to take effect. The terminal receives the first indication information from the base station, and may determine, according to the first indication information, configuration information of the mute time which takes effect, so as to determine, based on the configuration information of the mute time which takes effect, the position of the mute time in the time domain. In some embodiments, the first indication information may be carried in the MAC CE or the DCI. In some embodiments, the first indication information may include an index value or a mute state type corresponding to configuration information of the mute time which takes effect.

For example, the base station issues the configuration information of one mute time to the terminal via the high-layer signaling or the physical-layer signaling. Then, the base station may transmit the MAC CE or the DCI to the terminal, so as to indicate that the previously issued configuration information of the mute time takes effect.

As another example, the base station issues a plurality of configuration information (e.g., configuration information #1, configuration information #2 and configuration information #3) of mute time to the terminal via the high-layer signaling or the physical-layer signaling. Then, the base station may transmit the MAC CE or the DCI to the terminal, in which the MAC CE or the DCI comprises an index value or a mute state type corresponding to the configuration information (e.g., the configuration information #1) of the mute time which takes effect.

As another example, the base station issues a piece of DRX configuration information (which is equivalent to the configuration information of the mute time) to the terminal via the high-layer signaling or the physical-layer signaling. Then, the base station may transmit the MAC CE or the DCI to the terminal, so as to indicate that the previously issued DRX configuration information takes effect.

As another example, the base station issues a plurality of pieces of DRX configuration information to the terminal via the high-layer signaling or the physical-layer signaling. Then, the base station may transmit the MAC CE or the DCI to the terminal, in which the MAC CE or the DCI comprises an index value and/or a mute state type corresponding to the DRX configuration information which takes effect.

In some embodiments, the first indication information may be further used for indicating the start occasion of the mute time. As one example, the start occasion of the mute time is determined according to an occasion at which the terminal receives the first indication information. As another example, the start occasion of the mute time is determined according to the occasion at which the terminal receives the first indication information and a first offset value carried in the first indication information, that is, the start occasion of the mute time is equal to the sum of the occasion at which the terminal receives the first indication information and the first offset value. As yet another example, the start occasion of the mute time is determined according to a start occasion carried in the first indication information.

In some embodiments, the base station may also transmit second indication information to the terminal, wherein the second indication information is for indicating the base station exits the mute state, or the second indication information is used for indicating that the previously effective configuration information of the mute time lose efficacy. After receiving the second indication information, the terminal may determine the position of the mute time in the time domain no longer according to the previously effective configuration information of the mute time.

In some embodiments, the second indication information is further used for indicating the end occasion of the mute time. As one example, the end occasion of the mute time is determined according to an occasion at which the terminal receives the second indication information. As another example, the end occasion of the mute time is determined according to the occasion at which the terminal receives the second indication information and a second offset value carried in the second indication information. As yet another example, the end occasion of the mute time is determined according to an end occasion carried in the second indication information.

In some embodiments, the second indication information may include an index value and/or a mute state type corresponding to configuration information of the mute time which newly takes effect. The terminal re-determines the position of the mute time in the time domain according to the newly effective configuration information of the mute time.

In the embodiments of the present disclosure, the terminal receives the configuration information of the mute time from the base station, in which the mute time is the time when the base station is in the mute state, that is, the terminal learns from the base station the time when the base station is in the mute state, so that the terminal stops transmitting network data to the base station within the mute time of the base station, thereby avoiding the situation in which the usage perception of the terminal is reduced due to the fact that the terminal transmits the network data to the base station within the mute time of the base station but cannot obtain the response to the base station. Since the base station is in the mute state within the mute time, the power consumption of the base station can be reduced, and the communication between the terminal and the base station is ensured while the power consumption of the base station is reduced, thereby ensuring the usage perception of the terminal.

In some embodiments, in a case where a target cell on a target frequency point uses an energy-saving policy (for example, supporting the mute state mentioned above), during a cell re-selection process, the terminal may improve the priority of the target cell by using an offset value of the frequency point.

It can be understood that, by improving the priority of the target cell, some terminals that cannot support network energy saving select cells that do not support network energy saving, and some terminals that may supporting network energy saving select cells that support network energy saving, thereby realizing load balancing.

During the cell re-selection process, when the terminal sorts one or more cells, if the target frequency point or the target cell is configured with an offset value based on the frequency point, the terminal introduces the offset value

Qoffset$_{\text{NES-Freq}}$ based on the frequency point when calculating a cell criterion R value.

In some embodiments, the terminal adjusts the cell criterion R value of the target cell based on the offset value, so as to obtain an adjusted cell criterion R value (which may also be referred to as a target R value). Then, the terminal determines the priority of the target cell according to the adjusted cell criterion R value.

In some embodiments, in a case where the offset value is a positive value, the adjusted cell criterion R value is equal to the sum of the cell criterion R value before adjustment and the offset value. In some embodiments, in a case where the offset value is a negative value, the adjusted cell criterion R value is equal to the difference between the cell criterion R value before adjustment and the offset value.

In some embodiments, in a case where a frequency point where the target cell is located or the target cell is configured with the offset value QoffsetNES-Freq based on the frequency point, when the target cell is a serving cell of the terminal, the adjusted cell criterion R value of the target cell meets the following formula:

$$\mathrm{Rs} = \mathrm{Q_{meas,s}} + \mathrm{Q_{hyst}} - \mathrm{Q_{offsettemp}} + \mathrm{Qoffset_{NES\text{-}Freq}}$$

In the formula, Rs represents the adjusted cell criterion R value of the serving cell. $\mathrm{Q_{meas,s}}$ represents a reference signal received power (RSRP) value obtained by measuring the serving cell by the terminal when performing cell re-selection. $\mathrm{Q_{hyst}}$ represents a hysteresis value of cell re-selection. Qoffset$_{\text{temp}}$ represents an offset value which is temporarily used for adjusting the priority of the cell.

In some embodiments, in a case where the frequency point where the target cell is located or the target cell is configured with the offset value Qoffset$_{\text{NES-Freq}}$ based on the frequency point, in the case that the target cell is a neighboring cell of the terminal, the adjusted cell criterion R value of the target cell meets the following formula:

$$\mathrm{Rn} = \mathrm{Q_{meas,n}} - \mathrm{Q_{offset}} - \mathrm{Qoffset_{temp}} + \mathrm{Qoffset_{NES\text{-}Freq}}$$

In the formula, Rn represents the adjusted cell criterion R value of the neighboring cell. $\mathrm{Q_{meas,n}}$ represents a reference signal received power value obtained by measuring the neighboring cell by the terminal when performing cell re-selection.

For some terminals, for example, a narrow band Internet of Things (NB-IoT) UE, in order to ensure that the terminal may successfully decode the received PDSCH, an enough processing duration X needs to be reserved. The base station may indicate the disabling of HARQ feedback of one or more HARQ processes of the terminal, so that the terminal stops detecting the PDCCH within the processing duration X, and the base station stops scheduling the terminal to transmit data within the processing duration X.

**In** some embodiments, in a case where HARQ feedback of a target HARQ process is disabled, after the terminal receives one PDCCH of the target HARQ process, the terminal starts a timer, and a timing duration of the timer is greater than or equal to the processing duration X. During the operation of the timer, the terminal stops detecting the PDCCH. After the timer expires, a timer for detecting the PDCCH is started.

In some embodiments, in a case where the HARQ feedback of the target HARQ process is disabled, after the terminal receives one PDCCH of the target HARQ process, the terminal starts timers of all HARQ processes, for example, an HARQ RTT Timer, and a timing duration of the timer is greater than or equal to the processing duration X. During the operation of all timers, the terminal stops detecting the PDCCH.

In some embodiments, the terminal may transmit first capability indication information to the base station. Correspondingly, the base station receives the first capability indication information from the terminal. The first capability indication information is used for indicating whether the terminal requires a processing time with a duration of X when the HARQ feedback is disabled. In some embodiments, in a case where the first capability indication information comprises a preset identity, the first capability indication information is used for indicating that the terminal requires the processing time with the duration of X when the HARQ feedback is disabled. In some embodiments, in a case where the first capability indication information does not comprise the preset identity, the first capability indication information is used for indicating that the terminal does not require the processing time with the duration of X when the HARQ feedback is disabled.

In some embodiments, the base station may dynamically or semi-statically indicate the enabling or disabling of the HARQ feedback of the target HARQ process. For example, the base station may transmit third indication information to the terminal. Correspondingly, the terminal receives the third indication information from the base station. The third indication information is used for indicating the enabling or disabling of the HARQ feedback of the target HARQ process. The third indication information may be carried in signaling such as DCI and an RRC message.

In some embodiments, the third indication information may comprise an identity of the target HARQ process, and a threshold value of a transport block size (TBS) or the number of repetitions. When determining that the TBS or the number of repetitions is greater than the threshold value, the terminal determines that the HARQ feedback of the target HARQ process is enabled. On the contrary, when determining that the TBS or the number of repetitions is less than or equal to the threshold value, the terminal determines that the HARQ feedback of the target HARQ process is disabled.

In some embodiments, the third indication information may include an identity of the target HARQ process and information for indicating whether the HARQ feedback of the target HARQ process is enabled.

It can be understood that there may be one or more target HARQ processes, which is not limited herein.

In some embodiments, the RRC message issued by the base station configures the threshold value of the TBS or the number of repetitions. For the terminal, if the TBS or the number of repetitions is greater than the threshold value, it is considered that the HARQ feedback of the corresponding HARQ process is enabled; and otherwise, if the TBS or the number of repetitions is less than or equal to the threshold value, it is considered that the HARQ feedback is disabled.

In some embodiments, the base station may configure, by the RRC message, whether the DCI may dynamically enable or disable the HARQ feedback. On the premise that the RRC message configures that the DCI may dynamically enable or disable the HARQ feedback, the terminal may determine, based on the DCI, whether the HARQ feedback is enabled or disabled.

In some embodiments, in a case where the RRC message configures that the HARQ feedback is enabled, the DCI cannot dynamically enable or disable the HARQ feedback. That is, in a case where the RRC message configures that the HARQ feedback is enabled, the terminal does not determine, based on the indication of the DCI, whether the HARQ feedback is enabled or disabled.

In some embodiments, after a physical layer of the terminal receives the DCI carrying the third indication information, the physical layer of the terminal transmits the third indication information to an MAC layer of the terminal. The MAC layer of the terminal determines, according to the third indication information, whether the HARQ feedback is enabled.

In some embodiments, in a case where the MAC layer of the terminal determines that the HARQ feedback is enabled, the MAC layer of the terminal starts the corresponding HARQ RTT timer. In a case where the MAC layer of the terminal determines that the HARQ feedback is disabled, the MAC layer of the terminal does not start the corresponding HARQ RTT timer.

The solutions provided in some embodiments of the present disclosure are introduced above mainly from the perspective of interaction between nodes. It can be understood that, in order to implement the above functions, the nodes, for example, the base station and the terminal, include corresponding hardware structures and/or software modules for executing the functions. Those skilled in the art should be easily aware that, in combination with the algorithm steps of the examples described in the embodiments disclosed herein, the present invention may be implemented in hardware or a combination of hardware and computer software. Whether a certain function is executed by hardware or by computer software driving the hardware depends on particular applications and design constraint conditions of the technical solutions. Those skilled in the art may use different methods to implement the described functions for each particular application, but this implementation should not be considered as exceeding the scope of the present invention.

FIG. 9 is a schematic diagram of composition of an apparatus of information transmission according to some embodiments. As shown in FIG. 9, an apparatus 40 of information transmission comprises a transmitting unit 401 and a storage unit 402.

The apparatus 40 of information transmission may be a base station or a chip in the base station. When the apparatus of information transmission is used for implementing the functions of the base station in the above method, the units are configured to implement the following functions.

The transmitting unit 401 is configured to transmit configuration information of mute time to a terminal, the mute time being time when the base station is in a mute state.

In some embodiments, the base station in the mute state performs one or more of the following operations: turning off a dynamic scheduling function; stopping transmitting a downlink signal; stopping receiving an uplink signal; or turning on an energy-saving function.

In some embodiments, the configuration information of the mute time comprises one or more of the following parameters: a start occasion of the mute time, a duration of the mute time, or an end occasion of the mute time.

In some embodiments, the configuration information of the mute time comprises one or more of the following parameters: the length of a first time-domain resource containing one or more mute periods, a start occasion of the first time-domain resource, an end occasion of the first time-domain resource, the length of a repetition period of the first time-domain resource, a duration of the mute time, or the length of the mute period. There is one mute time in each mute period.

In some embodiments, the configuration information of the mute time comprises first configuration information and second configuration information. The first configuration information is used for configuring one or more first mute periods on a first time-domain resource, and there is mute time with a first duration in the first mute period; and the second configuration information is used for configuring one or more second mute periods within a non-mute time in the first mute period, and there is mute time with a second duration in the second mute period.

In some embodiments, the first configuration information comprises one or more of the following parameters: the length of the first time-domain resource, a start occasion of the first time-domain resource, an end occasion of the first time-domain resource, the first duration, or the length of the first mute period. The second configuration information comprises one or more of the following parameters: the second duration, the length of the second mute period, or the length of a second time-domain resource, the second time-domain resource being a time-domain resource used for configuring the second mute period within the non-mute time of the first mute period.

In some embodiments, the configuration information of the mute time is discontinuous reception (DRX) configuration information, and the DRX configuration information comprises one or more of the following parameters: the length of a DRX period, an on duration, the length of a first time-domain resource including one or more DRX periods, a start occasion of the first time-domain resource, or an end occasion of the first time-domain resource.

In some embodiments, the configuration information of the mute time comprises one or more of the following parameters: a bitmap sequence, a start occasion of a first time-domain resource, or a length of a repetition period of the first time-domain resource. The bitmap sequence comprises one or more indication bits, each indication bit corresponds to one time-domain unit in the first time-domain resource, and the indication bit is used for indicating whether the time-domain unit belongs to the mute time.

In some embodiments, the configuration information of the mute time is carried in a high-layer signaling or a physical-layer signaling, and the high-layer signaling comprises radio resource control (RRC) signaling, a medium access control (MAC) control element (MAC CE), or a system message.

In some embodiments, the high-layer signaling comprises one or more configuration information of mute time, and an index value and/or a mute state type corresponding to the configuration information of each mute time.

In some embodiments, the transmitting unit 401 is further configured to transmit first indication information to the terminal, the first indication information being for indicating the base station enters the mute state.

In some embodiments, the first indication information comprises an index value and/or a mute state type corresponding to the configuration information of the mute time which takes effect.

In some embodiments, the start occasion of the mute time is determined according to an occasion at which the terminal receives the first indication information; or the start occasion of the mute time is determined according to the occasion at which the terminal receives the first indication information and a first offset value carried in the first indication information; or the start occasion of the mute time is determined according to a start occasion carried in the first indication information.

In some embodiments, the transmitting unit 401 is further for transmitting second indication information to the terminal, the second indication information being for indicating that the base station exits the mute state.

In some embodiments, the second indication information is further used for indicating the end occasion of the mute time.

In some embodiments, the end occasion of the mute time is determined according to an occasion at which the terminal receives the second indication information; or the end occasion of the mute time is determined according to the occasion at which the terminal receives the second indication information and a second offset value carried in the second indication information; or the end occasion of the mute time is determined according to an end occasion carried in the second indication information.

In some embodiments, the storage unit 402 is for storing the configuration information of the mute time of the base station.

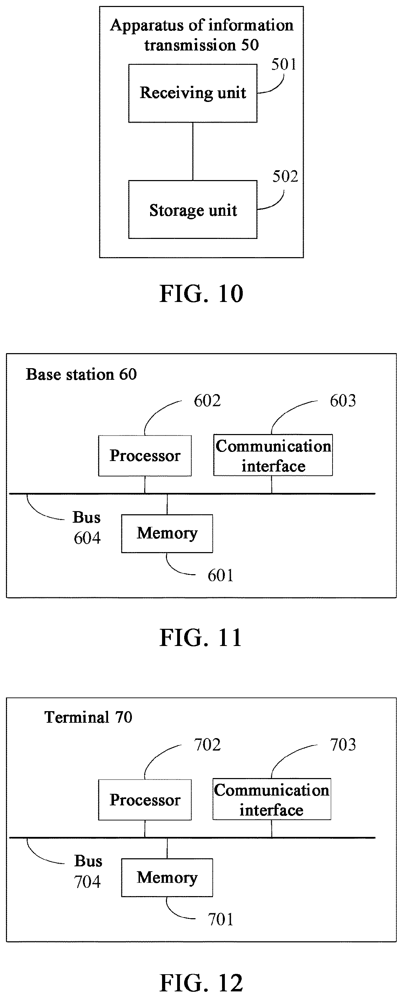

FIG. 10 is a schematic diagram of composition of another apparatus of information transmission according to some embodiments. As shown in FIG. 10, an apparatus 50 of information transmission comprises a receiving unit 501 and a storage unit 502.

The apparatus 50 of information transmission may be a terminal or a chip in the terminal. When the apparatus of information transmission is used for implementing the functions of the terminal in the above method, the units are configured to implement the following functions.

The receiving unit 501 is for receiving configuration information of mute time from a base station, in which the mute time is time when the base station is in a mute state.

In some embodiments, the base station in the mute state performs one or more of the following operations: turning off a dynamic scheduling function; stopping transmitting a downlink signal; stopping receiving an uplink signal; or turning on an energy-saving function.

In some embodiments, the configuration information of the mute time comprises one or more of the following parameters: a start occasion of the mute time, a duration of the mute time, or an end occasion of the mute time.

In some embodiments, the configuration information of the mute time comprises one or more of the following parameters: the length of a first time-domain resource containing one or more mute periods, a start occasion of the first time-domain resource, an end occasion of the first time-domain resource, a length of a repetition period of the first time-domain resource, a duration of the mute time, or a length of the mute period. There is one mute time in each mute period.

In some embodiments, the configuration information of the mute time comprises first configuration information and second configuration information. The first configuration information is used for configuring one or more first mute periods on a first time-domain resource, and there is mute time with a first duration in the first mute period; and the second configuration information is used for configuring one or more second mute periods within a non-mute time in the first mute period, and there is mute time with a second duration in the second mute period.

In some embodiments, the first configuration information comprises one or more of the following parameters: a length of the first time-domain resource, a start occasion of the first time-domain resource, an end occasion of the first time-domain resource, the first duration, or a length of the first mute period; and the second configuration information comprises one or more of the following parameters: the second duration, a length of the second mute period, or a length of a second time-domain resource, in which the second time-domain resource is a time-domain resource used for configuring the second mute period within the non-mute time of the first mute period.

In some embodiments, the configuration information of the mute time is discontinuous reception (DRX) configuration information. The DRX configuration information comprises one or more of the following parameters: a length of a DRX period, an on duration, a length of a first time-domain resource including at least one DRX period, a start occasion of the first time-domain resource, or an end occasion of the first time-domain resource.

In some embodiments, the configuration information of the mute time comprises one or more of the following parameters: a bitmap sequence, a start occasion of a first time-domain resource, or a length of a repetition period of the first time-domain resource. The bitmap sequence comprises one or more indication bits, each indication bit corresponds to one time-domain unit in the corresponding first time-domain resource, and the indication bit is for indicating whether the time-domain unit belongs to the mute time.

In some embodiments, the configuration information of the mute time is carried in a high-layer signaling or a physical-layer signaling. The high-layer signaling comprises radio resource control (RRC) signaling, an MAC CE, or a system message.

In some embodiments, the high-layer signaling comprises one or more configuration information of mute time, and an index value and/or a mute state type corresponding to each configuration information of mute time.

In some embodiments, the receiving unit 501 is further for receiving first indication information from the base station, in which the first indication information is for indicating the base station enters the mute state.

In some embodiments, the first indication information comprises an index value and/or a mute state type corresponding to the configuration information of the mute time which takes effect.

In some embodiments, the first indication information is further used for indicating the start occasion of the mute time.

In some embodiments, the start occasion of the mute time is determined according to an occasion at which the terminal receives the first indication information; or the start occasion of the mute time is determined according to the occasion at which the terminal receives the first indication information and a first offset value carried in the first indication information; or the start occasion of the mute time is determined according to a start occasion carried in the first indication information.

In some embodiments, the receiving unit 501 is further for receiving second indication information from the base station, in which the second indication information is for indicating that the base station exits the mute state.

In some embodiments, the second indication information is further used for indicating the end occasion of the mute time.

In some embodiments, the end occasion of the mute time is determined according to an occasion at which the terminal receives the second indication information; or the end occasion of the mute time is determined according to the occasion at which the terminal receives the second indication information and a second offset value carried in the second indication information; or the end occasion of the mute time is determined according to an end occasion carried in the second indication information.

In some embodiments, the storage unit 502 is for storing the configuration information of the mute time from the base station.

It should be noted that the units in FIG. 9 and FIG. 10 may also be referred to as modules, for example, the transmitting unit may be referred to as a transmitting module. In the embodiments shown in FIG. 9 and FIG. 10, the name of each unit may not be the name shown in the figure, for example, the transmitting unit may also be referred to as a communication unit, and the receiving unit may also be referred to as a communication unit.

When each unit in FIG. 9 and FIG. 10 is implemented in the form of a software functional module and sold or used as an independent product, the unit may be stored in a computer-readable storage medium. The technical solutions of the embodiments of the present disclosure substantially, or the parts contributing to the prior art, or part of or all the technical solutions may be embodied in the form of a software product, the computer software product is stored in a storage medium, and comprises several instructions for causing a computer device (which may be a personnel computer, a server, or a network device or the like) or a processor to execute all or part of the steps of the method in various embodiments of the present disclosure. The storage medium for storing the computer software product comprises a variety of media capable of storing program codes, such as a USB disk, a mobile hard disk, a read-only memory (ROM), a random access memory (RAM), a magnetic disk, or an optical disk.

In a case where the functions of an integrated module is implemented in the form of hardware, an embodiment of the present disclosure provides a schematic structural diagram of a base station, in which the base station may be the above apparatus 40 of information transmission. As shown in FIG. 11, a base station 60 comprises a processor 602, a communication interface 603 and a bus 604. In some embodiments, the base station 60 may further comprise a memory 601.

The processor 602 may implement or execute various exemplary logic blocks, modules and circuits described in combination with the disclosure content of the present disclosure. The processor 602 may be a central processing unit, a general-purpose processor, a digital signal processor, an application-specific integrated circuit, a field-programmable gate array or other programmable logic devices, a transistor logic device, a hardware component, or any combination thereof. The processor 602 may implement or execute various exemplary logic blocks, modules and circuits described in combination with the disclosure content of the present disclosure. The processor 602 may also be a combination for implementing a computing function, for example, including one or more microprocessor combinations, or a combination of a DSP and a microprocessor, etc.

The communications interface 603 is configured to connect with other devices by a communication network. The communication network may be an Ethernet, a radio access network, a wireless local area network (WLAN), or the like.

The memory 601 may be a read-only memory (ROM) or other types of static storage devices capable of storing static information and instructions, a random access memory (RAM) or other types of dynamic storage devices capable of storing information and instructions, an electrically erasable programmable read-only memory (EEPROM), a magnetic disk storage medium or other magnetic storage devices, or any other media capable of being used for carrying or storing desired program codes with instructions or data structure forms and capable of being accessed by a computer, but it is not limited thereto.

As one example, the memory 601 may be present independent of the processor 602, and the memory 601 may be connected with the processor 602 by the bus 604, and is configured to store instructions or program codes. When the processor 602 invokes and performs the instructions or program codes stored in the memory 601, the method of information transmission provided in the embodiments of the present disclosure may be implemented.

In another example, the memory 601 may also be integrated together with the processor 602.

The bus 604 may be an extended industry standard architecture (EISA) bus, and the like. The bus 604 may be classified into an address bus, a data bus, a control bus, and the like. For ease of representation, the bus is only represented by a thick line in FIG. 11, but it does not mean that there is only one bus or one type of buses.

In a case where the functions of the integrated module is implemented in the form of hardware, an embodiment of the present disclosure further provides a schematic structural diagram of a terminal. The terminal may be the above apparatus 50 of information transmission. As shown in FIG. 12, a terminal 70 comprises a processor 702, a communications interface 703 and a bus 704. In some embodiments, the terminal 70 may further comprise a memory 701.

The processor 702 may implement or execute various exemplary logic blocks, modules and circuits described in combination with the disclosure content of the present disclosure. The processor 702 may be a central processing unit, a general-purpose processor, a digital signal processor, an application-specific integrated circuit, a field-programmable gate array or other programmable logic devices, a transistor logic device, a hardware component, or any combination thereof. The processor 702 may implement or execute various exemplary logic blocks, modules and circuits described in combination with the disclosure content of the present disclosure. The processor 702 may also be a combination for implementing a computing function, for example, including one or more microprocessor combinations, or a combination of a DSP and a microprocessor.

The communications interface 703 is configured to connect with other devices by a communication network. The communication network may be an Ethernet, a radio access network, a wireless local area network (WLAN), or the like.

The memory 701 may be a read-only memory (ROM) or other types of static storage devices capable of storing static information and instructions, a random access memory (RAM) or other types of dynamic storage devices capable of storing information and instructions, an electrically erasable programmable read-only memory (EEPROM), a magnetic disk storage medium or other magnetic storage devices, or any other media capable of being used for carrying or storing desired program codes with instructions or data structure forms and capable of being accessed by a computer, but it is not limited thereto.

As one example, the memory 701 may be present independent of the processor 702, and the memory 701 may be connected with the processor 702 by the bus 704, and is configured to store instructions or program codes. When the processor 702 invokes and performs the instructions or program codes stored in the memory 701, the method of information transmission provided in the embodiments of the present disclosure may be implemented.

In another example, the memory 701 may also be integrated together with the processor 702.

The bus 704 may be an extended industry standard architecture (EISA) bus, and the like. The bus 704 may be classified into an address bus, a data bus, a control bus, and the like. For ease of representation, the bus is only represented by a thick line in FIG. 12, but it does not mean that there is only one bus or one type of buses.

By means of the description of the above implementations, those skilled in the art to which the present disclosure may clearly understand that, for the purpose of convenient and brief description, only the division of the above functional modules is illustrated. **In** actual applications, the above functions may be allocated to different functional modules for completion as needed, that is, the internal structure of the base station or the terminal is divided into different functional modules to complete all or part of the functions described above.

An embodiment of the present disclosure further provides a computer-readable storage medium. All or some processes in the above method embodiments may be completed by computer instructions instructing related hardware, a program may be stored in the computer-readable storage medium, and when the program is executed, the processes of the method embodiments may be included. The computer-readable storage medium may be any one of the above embodiments or a memory. The computer-readable storage medium may also be an external storage device of the base station or the terminal, for example, a plug-in hard disk, a smart media card (SMC), a secure digital (SD) card, a flash card, and the like, which are provided on the base station or the terminal. Further, the computer-readable storage medium can not only include an internal storage unit of the base station or the terminal, but can also include the external storage device. The computer-readable storage medium is configured to store a computer program and other programs and data required by the base station or the terminal. The computer-readable storage medium may also be configured to temporarily store data that has been output or will be output.

An embodiment of the present disclosure further provides a computer program product, including a computer program. When the computer program product runs on a computer, the computer is caused to execute any method of information transmission provided in the above embodiments.

Although the present disclosure has been described herein in combination with various embodiments, during the process of implementing the present disclosure as claimed, those skilled in the art may understand and implement other variations of the disclosed embodiments by viewing the drawings, the disclosure content and the appended claims. In the claims, "comprising" does not exclude other components or steps, and "a/an" or "one" does not exclude the case of a plurality of. A single processor or other units may implement several functions enumerated in the claims. Some measures are recorded in dependent claims that are different from each other, but this does not mean that these measures cannot be combined to generate a good effect.

Although the present disclosure has been described in conjunction with the detailed features and the embodiments thereof, it is apparent that various modifications and combinations may be made to the present disclosure without departing from the spirit and scope of the present disclosure. Correspondingly, the present specification and the drawings are merely exemplary descriptions of the present disclosure defined by the appended claims, and are considered to cover any and all modifications, variations, combinations or equivalents in the scope of the present disclosure. Obviously, those skilled in the art may make various modifications and variations to the present disclosure without departing from the spirit and scope of the present disclosure. If all these modifications and variations of the present application fall within the scope of the claims of the present disclosure and equivalent technologies thereof, the present disclosure is also intended to contain these modifications and variations.

The above descriptions are only implementations of the present disclosure, but the protection scope of the present disclosure is not limited thereto, and any changes or substitutions within the technical scope disclosed in the present disclosure should fall within the protection scope of the present disclosure. Therefore, the protection scope of the present disclosure shall be subject to the protection scope of the claims.

**Claims**

1. A method of information transmission, comprising:
   transmitting, by a base station to a terminal, configuration information of mute time, the mute time being time when the base station is in a mute state.

2. The method according to claim 1, wherein the base station in the mute state performs one or more of the following operations:

   turning off a dynamic scheduling function;
   stopping transmitting a downlink signal;
   stopping receiving an uplink signal; or,
   turning on an energy-saving function.

3. The method according to claim 1, wherein the configuration information of mute time comprises one or more of the following parameters: a start occasion of the mute time, a duration of the mute time, or an end occasion of the mute time.

4. The method according to claim 1, wherein the configuration information of mute time comprises one or more of the following parameters:

    a length of a first time-domain resource containing one or more mute periods,
    a start occasion of the first time-domain resource,
    an end occasion of the first time-domain resource,
    a length of a repetition period of the first time-domain resource, a duration of the mute time, or
    a length of the mute period; and

there is one mute time in each mute period.

5. The method according to claim 1, wherein the configuration information of mute time comprises first configuration information and second configuration information; the first configuration information is for configuring one or more first mute periods on a first time-domain resource, and there is mute time with a first duration in the first mute period; and the second configuration information is for configuring one or more second mute periods within non-mute time in the first mute period, and there is mute time with a second duration in the second mute period.

6. The method according to claim 5, wherein the first configuration information comprises one or more of the following parameters: a length of the first time-domain resource, a start occasion of the first time-domain resource, an end occasion of the first time-domain resource, the first duration, or a length of the first mute period; and
the second configuration information comprises one or more of the following parameters: the second duration, a length of the second mute period, or a length of a second time-domain resource, wherein the second time-domain resource is a time-domain resource for configuring the second mute period within the non-mute time of the first mute period.

7. The method according to claim 1, wherein the configuration information of mute time is discontinuous reception (DRX) configuration information, and the DRX configuration information comprises one or more of the following parameters:

    a length of a DRX period,
    an on duration,
    a length of a first time-domain resource comprising one or more DRX periods,
    a start occasion of the first time-domain resource, or
    an end occasion of the first time-domain resource.

8. The method according to claim 1, wherein the configuration information of mute time comprises one or more of the following parameters:

    a bitmap sequence,
    a start occasion of a first time-domain resource, or
    a length of a repetition period of the first time-domain resource;
    wherein the bitmap sequence comprises one or more indication bits each corresponds to one time-domain unit in the first time-domain resource, and the indication bit is for indicating whether the time-domain unit corresponding to the indication bit belongs to the mute time.

9. The method according to any of claims 1-8, wherein the configuration information of mute time is carried in a high-layer signaling or a physical-layer signaling, and the high-layer signaling comprises a radio resource control (RRC) signaling, a medium access control control element (MAC CE), or a system message.

10. The method according to claim 9, wherein the high-layer signaling comprises one or more configuration information of mute time, and an index value and/or a mute state type corresponding to each configuration information of mute time.

11. The method according to claim 9, further comprising:
transmitting, by the base station to the terminal, first indication information, wherein the first indication information is for indicating that the base station enters the mute state.

12. The method according to claim 11, wherein the first indication information comprises an index value and/or a mute state type corresponding to the configuration information of mute time which takes effect.

13. The method according to claim 11 or 12, wherein the first indication information is further for indicating a start occasion of the mute time.

14. The method according to claim 13, wherein the start occasion of the mute time is determined according to the occasion at which the terminal receives the first indication information; or,

    the start occasion of the mute time is determined according to the occasion at which the terminal receives the first indication information and a first offset value carried in the first indication information; or,
    the start occasion of the mute time is determined according to a start occasion carried in the first indication information.

15. The method according to claim 1, further comprising:
    transmitting, by the base station to the terminal, second indication information, wherein the second indication information is for indicating that the base station exits the mute state.

16. The method according to claim 15, wherein the second indication information is further for indicating an end occasion of the mute time.

17. The method according to claim 16, wherein the end occasion of the mute time is determined according to an occasion at which the terminal receives the second indication information; or,

    the end occasion of the mute time is determined according to the occasion at which the terminal receives the second indication information and a second offset value carried in the second indication information; or,
    the end occasion of the mute time is determined according to an end occasion carried in the second indication information.

18. A method of information transmission, comprising:
    receiving, by a terminal from a base station, configuration information of mute time, the mute time being time when the base station is in a mute state.

19. The method according to claim 18, wherein the base station in the mute state performs one or more of the following operations:

    turning off a dynamic scheduling function;
    stopping transmitting a downlink signal;
    stopping receiving an uplink signal; or,
    turning on an energy-saving function.

20. The method according to claim 18, wherein the configuration information of mute time comprises one or more of the following parameters: a start occasion of the mute time, a duration of the mute time, or an end occasion of the mute time.

21. The method according to claim 18, wherein the configuration information of the mute time comprises one or more of the following parameters:

    a length of a first time-domain resource containing one or more mute periods,
    a start occasion of the first time-domain resource,
    an end occasion of the first time-domain resource,
    a length of a repetition period of the first time-domain resource,
    a duration of the mute time, or
    a length of the mute period; and

    there is one mute time in each mute period.

22. The method according to claim 18, wherein the configuration information of mute time comprises first configuration information and second configuration information; the first configuration information is for configuring one or more first mute periods on a first time-domain resource, and there is mute time with a first duration in the first mute period; and the second configuration information is for configuring one or more second mute periods within a non-mute time in the first mute period, and there is mute time with a second duration in the second mute period.

23. The method according to claim 22, wherein the first configuration information comprises one or more of the following parameters: a length of the first time-domain resource, a start occasion of the first time-domain resource, an end occasion of the first time-domain resource, the first duration, or a length of the first mute period; and
the second configuration information comprises one or more of the following parameters: the second duration, a length of the second mute period, or a length of a second time-domain resource, wherein the second time-domain resource is a time-domain resource for configuring the second mute period within the non-mute time of the first mute period.

24. The method according to claim 18, wherein the configuration information of mute time is discontinuous reception (DRX) configuration information, and the DRX configuration information comprises one or more of the following parameters:

   a length of a DRX period,
   an on duration,
   a length of a first time-domain resource comprising one or more DRX periods,
   a start occasion of the first time-domain resource, or
   an end occasion of the first time-domain resource.

25. The method according to claim 18, wherein the configuration information of mute time comprises one or more of the following parameters:

   a bitmap sequence,
   a start occasion of a first time-domain resource, or
   a length of a repetition period of the first time-domain resource;
   wherein the bitmap sequence comprises one or more indication bits each corresponds to one time-domain unit in the first time-domain resource, and the indication bit is for indicating whether the time-domain unit belongs to the mute time.

26. The method according to any of claims 18-25, wherein the configuration information of the mute time is carried in a high-layer signaling or a physical-layer signaling, and the high-layer signaling comprises a radio resource control (RRC) signaling, a medium access control control element (MAC CE), or a system message.

27. The method according to claim 26, wherein the high-layer signaling comprises one or more configuration information of mute time, and an index value and/or a mute state type corresponding to each configuration information of mute time.

28. The method according to claim 26, further comprising:
receiving, by the terminal, first indication information from the base station, wherein the first indication information is for indicating that the base station enters the mute state.

29. The method according to claim 28, wherein the first indication information comprises an index value and/or a mute state type corresponding to the configuration information of mute time which takes effect.

30. The method according to claim 28 or 29, wherein the first indication information is further for indicating a start occasion of the mute time.

31. The method according to claim 30, wherein the start occasion of the mute time is determined according to the occasion at which the terminal receives the first indication information; or,

   the start occasion of the mute time is determined according to the occasion at which the terminal receives the first indication information and a first offset value carried in the first indication information; or,
   the start occasion of the mute time is determined according to a start occasion carried in the first indication information.

32. The method according to claim 18, further comprising:
receiving, by the terminal, second indication information from the base station, wherein the second indication information is for indicating that the base station exits the mute state.

33. The method according to claim 32, wherein the second indication information is further for indicating an end occasion of the mute time.

34. The method according to claim 33, wherein the end occasion of the mute time is determined according to an occasion at which the terminal receives the second indication information; or,

the end occasion of the mute time is determined according to the occasion at which the terminal receives the second indication information and a second offset value carried in the second indication information; or, the end occasion of the mute time is determined according to an end occasion carried in the second indication information.

35. A base station comprising a processor and a memory, wherein,

the memory stores instructions executable by the processor; and the processor is configured to, when executing the instructions, cause the base station to implement the method according to any of claims 1-17.

36. A terminal comprising a processor and a memory, wherein,

the memory stores instructions executable by the processor; and the processor is configured to, when executing the instructions, cause the terminal to implement the method according to any of claims 18-34.

37. A computer-readable storage medium, wherein the computer-readable storage medium comprises computer instructions, when executed on a computer, causing the computer to perform the method according to any of claims 1-17, or the method according to any of claims 18-34.

FIG. 1

FIG. 2

FIG. 3

FIG. 4

EP 4 615 062 A1

Start occasion            T2            End occasion   Start occasion            T2            End occasion

Mute period#1     Mute period#2              Mute period#1     Mute period#2

...    ...                           ...    ...        ...    ...

T1         T1                 T1         T1

Mute state    Mute state             Mute state    Mute state

FIG. 5

FIG. 6

FIG. 7

Start occasion

End occasion

T2

| Time-do-main unit 1 | Time-do-main unit 2 | Time-do-main unit 3 | Time-do-main unit 4 | ... ... | Time-do-main unit 1 | Time-do-main unit 2 | Time-do-main unit 3 | Time-do-main unit 4 | ... ... |

Mute state

Mute state

**FIG. 8**

Apparatus of information transmission 40

Transmitting unit 401

Storage unit 402

**FIG. 9**

Apparatus of information
transmission 50

Receiving unit — 501

Storage unit — 502

FIG. 10

Base station 60

Processor — 602

Communication interface — 603

Bus 604

Memory — 601

FIG. 11

Terminal 70

Processor — 702

Communication interface — 703

Bus 704

Memory — 701

FIG. 12

## INTERNATIONAL SEARCH REPORT

| International application No. |
| --- |
| **PCT/CN2023/108393** |

**A.    CLASSIFICATION OF SUBJECT MATTER**

H04W52/02(2009.01)i

According to International Patent Classification (IPC) or to both national classification and IPC

**B.    FIELDS SEARCHED**

Minimum documentation searched (classification system followed by classification symbols)

IPC:H04W; H04Q; H03L

Documentation searched other than minimum documentation to the extent that such documents are included in the fields searched

Electronic data base consulted during the international search (name of data base and, where practicable, search terms used)

3GPP, CJFD, CNTXT, ENTXT, ENTXTC, WPABS, WPABSC, IEEE: 基站, 静默, 消隐, 时间, 时隙, 配置, 指示, BS, silence, Reverse Link Silence Duration, time, slot, duration, configuration, indication

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018119792 A1 (HUAWEI TECHNOLOGIES CO., LTD.) 05 July 2018 (2018-07-05) description, line 3-page 8, line 22 | 1-37 |
| X | US 2015003273 A1 (CHINA ACADEMY OF TELECOMMUNICATIONS TECHNOLOGY) 01 January 2015 (2015-01-01) description, paragraphs [0028]-[0071] | 1-37 |
| X | CN 104025687 A (QUALCOMM INC.) 03 September 2014 (2014-09-03) description, paragraphs [0076]-[0174] | 1-37 |
| A | US 2020221392 A1 (QUALCOMM INC.) 09 July 2020 (2020-07-09) entire document | 1-37 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2023** | **07 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/108393**

| Patent document cited in search report | | | Publication date (day/month/year) | Patent family member(s) | | | Publication date (day/month/year) |
|---|---|---|---|---|---|---|---|
| WO | 2018119792 | A1 | 05 July 2018 | None | | | |
| US | 2015003273 | A1 | 01 January 2015 | EP | 2819449 | A1 | 31 December 2014 |
| | | | | EP | 2819449 | A4 | 01 July 2015 |
| | | | | EP | 2819449 | B1 | 27 July 2016 |
| | | | | WO | 2013123852 | A1 | 29 August 2013 |
| | | | | US | 9936392 | B2 | 03 April 2018 |
| CN | 104025687 | A | 03 September 2014 | IN | 2983N2014A | | 03 July 2015 |
| | | | | WO | 2013070717 | A1 | 16 May 2013 |
| | | | | US | 2013114473 | A1 | 09 May 2013 |
| | | | | US | 9220101 | B2 | 22 December 2015 |
| | | | | JP | 2014535248 | A | 25 December 2014 |
| | | | | JP | 6092239 | B2 | 08 March 2017 |
| | | | | EP | 2795978 | A1 | 29 October 2014 |
| | | | | EP | 2795978 | B1 | 20 May 2020 |
| | | | | JP | 2019004473 | A | 10 January 2019 |
| | | | | KR | 20140095543 | A | 01 August 2014 |
| | | | | KR | 101549066 | B1 | 01 September 2015 |
| | | | | WO | 2013070721 | A1 | 16 May 2013 |
| | | | | EP | 2777343 | A1 | 17 September 2014 |
| | | | | US | 2013182655 | A1 | 18 July 2013 |
| | | | | US | 9001758 | B2 | 07 April 2015 |
| | | | | JP | 2014533065 | A | 08 December 2014 |
| | | | | JP | 5763279 | B2 | 12 August 2015 |
| | | | | KR | 20140090254 | A | 16 July 2014 |
| | | | | EP | 2777348 | A1 | 17 September 2014 |
| | | | | EP | 2777348 | B1 | 04 March 2020 |
| | | | | JP | 2014533063 | A | 08 December 2014 |
| | | | | EP | 2777345 | A1 | 17 September 2014 |
| | | | | IN | 6115N2014A | | 03 July 2015 |
| | | | | KR | 20150113214 | A | 07 October 2015 |
| | | | | EP | 2777346 | A1 | 17 September 2014 |
| | | | | EP | 2777346 | B1 | 06 May 2020 |
| | | | | IN | 2985N2014A | | 03 July 2015 |
| | | | | KR | 20140090249 | A | 16 July 2014 |
| | | | | KR | 101534583 | B1 | 07 July 2015 |
| | | | | KR | 20140090255 | A | 16 July 2014 |
| | | | | KR | 101601172 | B1 | 08 March 2016 |
| | | | | IN | 6114N2014A | | 03 July 2015 |
| | | | | JP | 2015503271 | A | 29 January 2015 |
| | | | | JP | 5911967 | B2 | 11 May 2016 |
| | | | | KR | 20140090251 | A | 16 July 2014 |
| | | | | KR | 101701882 | B1 | 02 February 2017 |
| | | | | WO | 2013070731 | A1 | 16 May 2013 |
| | | | | JP | 2014533064 | A | 08 December 2014 |
| | | | | US | 2013114436 | A1 | 09 May 2013 |
| | | | | US | 8804693 | B2 | 12 August 2014 |
| | | | | US | 2013121265 | A1 | 16 May 2013 |
| | | | | US | 8891467 | B2 | 18 November 2014 |
| | | | | JP | 2016192774 | A | 10 November 2016 |
| | | | | JP | 6661479 | B2 | 11 March 2020 |

Form PCT/ISA/210 (patent family annex) (July 2022)

**INTERNATIONAL SEARCH REPORT**
Information on patent family members

International application No.

**PCT/CN2023/108393**

| Patent document cited in search report | | | Publication date (day/month/year) | Patent family member(s) | | | Publication date (day/month/year) |
|---|---|---|---|---|---|---|---|
| | | | | WO | 2013070714 | A1 | 16 May 2013 |
| | | | | IN | 2195DN2014A | | 03 July 2015 |
| | | | | US | 2013114571 | A1 | 09 May 2013 |
| US | 2020221392 | A1 | 09 July 2020 | WO | 2020146268 | A1 | 16 July 2020 |
| | | | | US | 10880844 | B2 | 29 December 2020 |

**EP 4 615 062 A1**

**Patent documents cited in the description**

- CN 202211372713